# EUROPEAN PATENT SPECIFICATION

(11) **EP 0 899 198 B1**
(45) Date of publication and mention of the grant of the patent: **06.10.1999**
(21) Application number: 98120229.4
(22) Date of filing: 26.02.1997
(51) Int. Cl.: B65C 11/00, G11B 23/40, G09F 3/10

(54) **Labelling method**
Etikettierverfahren
Procédé d' étiquetage

(30) Priority: 26.02.1996 GB 9604048
(43) Date of publication of application: 03.03.1999
(62) Divisional of application: 97908454.8
(73) Proprietor: Rocky Mountain Traders, Ltd., London WC1B 3QE (GB)
(72) Inventor: Grossman, Stanley I., London, NW3 2AS (GB)
(74) Representative: Caldwell, Judith Margaret

(56) References cited:
- WO-A-96/05057
- DE-U- 29 617 424
- US-A- 5 316 464

## Description

### Technical Field

This invention relates to a method for applying or adhering two substantially planar discs each having a central aperture so that they are concentrically aligned, and more specifically, to a method for centering and applying labels to compact discs.

### Background

Electra-optical storage devices presently include Compact Disc Read Only Memory devices (CD ROMs) which are stored digital information, the information being either or both audio and visual in nature. CD ROMs comprise a plastic or "glass" disc which is etched or cut such that when placed in a CD ROM reader and spun at high speed the etched pattern may be identified by a laser or other scanning method.

By their form, function and manufacture, CD ROMs are generally indistinguishable from one another. It is also generally difficult if not impossible to identify the nature or content of the information on a given CD ROM by visual inspection alone. It is therefore necessary to provide CD ROMs with a physical, unique mark or label.

The capability of a CD ROM faithfully to represent the information contained thereon is in large part dependent on the ability of the disc to be placed into a sustained, steady high speed spin about its physical centre. This high speed spin presents complications to the marking methods employed.

Traditional ink based marking methods wherein the ink is applied directly to the disc must use an ink that will remain in place during sustained high speed spin. Additionally, the ink must be non-deleterious to the material of the disc. Use of conventional writing instruments, such as felt tip pens, is generally unsatisfactory since the ink may particulate and become dissociated from the disc with the potential for becoming lodged in the mechanism of the disc reader. In addition, marking in this way does not present a professional appearance if the CD ROMs are to be sold or used commercially

Printers specially adapted for printing onto compact discs are available. However, the cost of such printers, currently ranging between £3K and £10K, is prohibitive to those who are producing CD ROMs in low volumes only.

An alternative to using an ink marker directly on the disc is to use a label, usually a self-adhesive label, which is subsequently attached to the disc. While in theory this seems a simple task, because of the high speed at which the disc must be spun, it is essential that the label be affixed in such a way that the overall balance of the disc is not adversely affected. In particular, it is necessary that the centre of balance of the disc remains about its geometric centre. Labels which are not concentrically affixed to the discs, for example, "half-moon" or semicircular labels, have previously caused malfunctions and often rendered the discs virtually useless.

A known device for concentrically applying self-adhesive labels to compact discs, as described in WO 9605057 to Micropatent, comprises a first member comprising a cylinder closed at one end by a slightly convex exterior face having a central aperture corresponding approximately to the size of the central aperture of a label and a second member comprising a plunger including a first portion having a diameter approximating to the diameter of the aperture of the first member and a second portion having a diameter corresponding approximately to the diameter of the central aperture of the compact disc and the first and second portions together forming a shoulder against which the compact disc is seated.

In use, the operator must initially position an adhesive label on the first member so that its adhesive surface is uppermost and the label aperture is aligned with the central aperture of the end face of the cylinder. This step alone can be difficult because of the tendency of the label to stick to the operators fingers and hence move off-centre when the operator attempts to withdraw his fingers ready for the compact disc to be pressed onto the label. Also, there is a tendency for the label to curl upwards when the operator is not holding the label down.

Once the label is in its desired position on the first member, the compact disc which is retained against the shoulder portion of the plunger can be pressed down onto the label. In order to achieve the desired concentric alignment between the label and the disc, it is necessary to firmly press the disc against the shoulder portion while pushing the first portion of the plunger through the aligned apertures of the first member and the label.

Since the surface of the first member against which the label and compact disc are pressed is not planar, further care has to be taken to ensure that no air bubbles are trapped between the label and the disc as such bubbles are not only unsightly but may also cause balancing problems in the CD ROM reader.

It is therefore an object of the present invention to provide an improved method for applying a label to a compact disc device.

### SUMMARY OF THE INVENTION

From one aspect, the present invention resides in a method for applying a first substantially planar member having a central aperture of a first diameter to a second substantially planar member having a central aperture of a second diameter, comprising the steps of:
positioning the first member on an upper surface of a circumferential flange so that the central aperture of the first member is aligned with an aperture defined in the flange by placing the central aperture of the first member about a first rod having a first end, a second end and a third diameter slightly less than the first diameter, the first rod located in a first position so as to extend through the aperture in the flange;
inserting a second rod having a fourth diameter slightly less than the second diameter through the central aperture of the second member to position the second member; and
pressing the positioned second member against the positioned first member thereby to apply together the first and second members by displacing the second rod extending from the first end of the first rod against a return force provided by spring means, said displacement being relative to the upper surface from the first position to a second position in which the first end is located either entirely below or level with the upper surface.

Preferred features of the method according to the invention are set out in the appendant claims.

From another aspect, the invention also resides in a device for applying a first substantially planar member having a central aperture of a first diameter to a second substantially planar member having a central aperture of a second diameter. Such a device is the subject of parent European patent application no. 97908454.8 (publication no. EP 0868353), the device claimed therein comprising:
(i) an assembly including a circumferential flange having an upper flange surface capable of supporting said first planar member;
(ii) a piston member having an upper surface;
(iii) a first rod of having a diameter slightly less than said first diameter, extending from the upper surface of said piston member; and
(iv) a second rod having a diameter slightly less than said second diameter, extending from said first rod;
   wherein the first diameter is greater than the second diameter, and
   wherein said piston member is adapted to move from a first position in which said second rod and at least a portion of said first rod extend above said upper flange surface to a second position in which at least said first rod is entirely below, or is level with said upper flange surface.

From a yet further aspect, the invention of said parent application resides in a device for applying a first substantially planar member having a central aperture of diameter A to a second substantially planar member having a central aperture of diameter B, the device comprising:
(i) a tube having an upper end and a lower end in use;
(ii) a circumferential flange extending from the upper end of the tube in use;
(iii) a piston member slidably received in the tube;
(iv) a first rod of approximately diameter A extending from the upper surface in use of the piston member; and
(v) a second rod of approximately diameter B extending from the first rod, wherein diameter A is greater than diameter B and the piston member is adapted to move from a first position in which the second rod and at least a portion of the first rod extend above the upper surface of the flange to a second position in which at least the first rod depends below or is level with the upper surface of the flange.

By means of the device, the first and second members can be reliably retained with their respective central apertures in concentric alignment and, by moving the piston from first to second positions, they can be brought together with their alignment maintained. In particular, by virtue of the first rod having a substantially similar diameter to the aperture of the first member, the first member can be retained in position on the flange by means of the first rod extending through its aperture. Similarly, the second rod, having a diameter substantially similar to the aperture of the second member, is able to retain the second member in position.

In a preferred embodiment, movement of the piston member within the tube is spring-assisted. Preferably, the tube is provided with a spring which co-operates with the lower surface in use of the piston member and urges the piston member to move from the second, lower position to the first, raised position. In this way, the piston automatically returns to its starting position for use.

When the device is provided with spring means, it is preferred that the spring is retained within the tube by means of a closure piece or cover disc extending across the lower end in use of the tube. In order to prevent pressure build-up within the tube when the piston is depressed, the closure piece is advantageously provided with pressure release means, for example, in the form of a hole, to allow air to escape from the tube. Of course, such pressure release means can be provided elsewhere on the device, for example, in the wall of the tube.

For ease of use, the tube may be provided at its lower end with a supporting member to facilitate the device remaining steady when pressure is applied to move the piston from first to second positions. The supporting member may be in the form of a substantially planar plate and may be integral with or separate from the closure piece referred to above.

For both ease of manufacture and aesthetic purposes, the supporting member may mirror the shape of the circumferential flange. Moreover, in order not to negate the usefulness of any pressure release means provided on the closure member, the underside in use of the supporting member may be provided with a plurality of feet to raise the supporting member. Provision of such feet also help reduce the possibility of the device scratching or otherwise damaging the work surface where it is being used.

Ideally, the piston member is prevented from being withdrawn from the upper end in use of the tube, for example, a collar may be provided on the interior of the tube at its upper end in use or, more preferably, the circumferential flange may be such that it extends beyond the interior diameter of the tube.

Preferably the flange has an upper surface capable of supporting the first planar member and to achieve this it is especially advantageous that the inner diameter of the flange approximates to diameter A.

Furthermore, while the upper surface of the flange may be slightly concave, a substantially planar surface is preferred since, when used to apply adhesive labels to compact discs, the planar surface reduces the opportunity for bubbles to form and also avoids flexing of the compact disc. While the circumferential flange may have a circular outer radius, this is not essential and other shapes are envisaged as may be appropriate to the shape of the planar member to be supported.

As will be appreciated, the second rod extends concentrically from the first rod. Moreover, since the second rod is of smaller diameter than the first rod, when the two rods are conjoined, there is created a shoulder portion against which the second planar member is at least partially supported in use.

Preferably, the second rod extends for a sufficient length to enable the operator to use the rod as a plunger rod for moving the piston between first and second positions. In this way, there is no need for additional handle or grip means and, in any event, provision of these additional features would detract from the convenience and simplicity of the device according to the invention.

While the various piston members and rods may be joined to each other by adhesive or screw means, for ease of manufacture and strength, they are more preferably formed in one piece, such as by turning or, more simply, by moulding.

The invention as described is particularly suited to the application of adhesive labels to compact discs. In such an application, the first planar member is generally a label which is placed adhesive face upwards on the circumferential flange. Since the diameters of the first rod and label aperture are substantially the same, and because the first rod extends above the upper surface of the flange when in its initial position, movement or slippage of the label is virtually impossible and there is also little opportunity for the label to curl. The second planar member is generally the compact disc and this is positioned such that the second rod protrudes through the disc aperture, both being of similar diameters. As will be understood, the lower face of the disc will come to rest against the distal end of the first rod, this being of larger diameter than the aperture in the disc. Once in their respective starting position, it is simply a matter of depressing the second rod to bring the upper face of the label and the lower face of the disc into contact thereby adhering the label to the disc.

The method and device according to the present invention is suitable for applying labels of varying shapes and sizes to compact discs. Where it is desired to incorporate as much information as possible to the label, the label may extend to almost the outer edge of the disc. Alternatively, where the surface area needed to convey the information is not so great, the label may be of substantially smaller diameter than the disc. By altering the diameter of the first rod, it is possible to satisfactorily affix labels of any chosen width or diameter.

Expressed in another way, the present invention comprises a method and device capable of placing two circular objects together concentrically such as in the instance of affixing a circular flat label onto a circular flat CD ROM.

From a yet further aspect, the invention consists of a one piece assembly for applying labels to CD ROMs, comprising an enclosure assembly containing a piston means capable of being deflected upwardly and downwardly within the enclosure assembly with the effect of applying an adhesive label to a CD ROM such that the central hole of the label is aligned concentrically with the central hole of the CD ROM.

More especially, the assembly is such that the piston means has a resting position extending upwardly through a hole in the top of the housing assembly and extending to a height sufficient to avoid complications presented by curled labels.

From another aspect, the invention resides in a labelling device comprising at least one tube of a fixed diameter, one flat piece with a circular hole in it that is positioned over the open end of the tube and a rod of several diameters which moves from a resting position which is upwards, protruding through the hole in the flat surface to a fully deflected position which is downwardly to a point where the wider diameter of the rod is contained within the cylinder and the two narrower diameter portions of the rod remain extended upwardly through the hole in the flat surface sitting on top of the cylinder.

When in operation, the disc with the larger centre hole, typically the label, is first placed on the flat surface with its adhesive side pointing upwardly, with the rod extending through the flat surface and the centre of this disc with the wider hole. The disc with the smaller diameter centre hole is placed on the portion of the rod that is protruding upwardly through the centre of the flat surface and the disc with the wider centre hole.

The present invention operates to apply adhesive backed labels to CD ROMs as follows:

The wax paper backing of the self-adhesive label is removed and the label is placed adhesive side up over and around the rod and brought to rest on the flat surface. In this position the rod is protruding up through the hole in the centre of the label. The CD ROM is placed face down over and around the rod. In this position it is kept from making contact with the label by the rod. By pushing down gently on the disc the rod is forced to retract into the cylinder until the CD ROM comes in contact with the adhesive side of the label.

### DESCRIPTION OF THE PREFERRED EMBODIMENTS

A specific embodiment of the invention will now be described by way of example with reference to the accompanying drawings in which:
Figure 1 illustrates all the individual components of a preferred embodiment of this present invention along with the CD ROM 1 and the disc label 2;
Figure 2 shows in perspective the present invention fully assembled with the CD ROM and the CD label just prior to application.

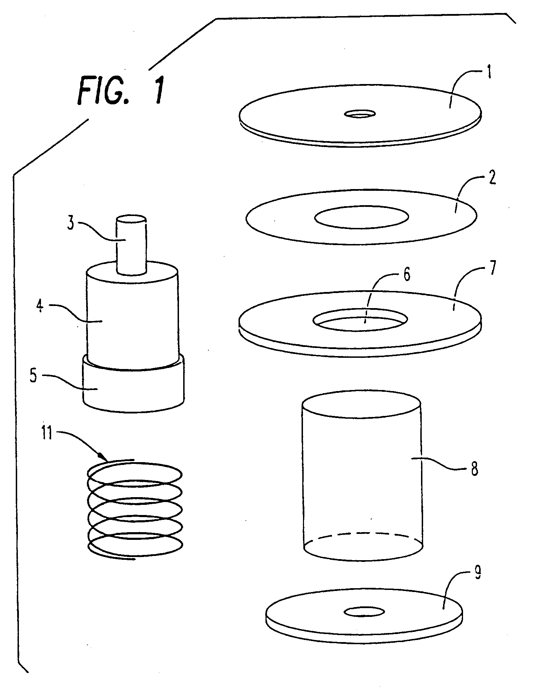

Referring to Figure 1, the present invention comprises a top cover plate 7 with a central hole 6. This plate is affixed to cylinder 8 such that cylinder 8 and hole 6 are concentrically aligned. In this preferred embodiment, bottom cover plate 9 is affixed to the lower opening of cylinder 8. The enclosure assembly 21 formed by top cover plate 7, cylinder 8 and bottom cover plate 9 houses piston 5. Integral with piston 5 are solid rods 3, 4 of varying concentric diameters with the narrowest rod 3, extending upwardly above the top cover plate 7. The piston 5 is generally free to travel upwardly and downwardly within the enclosure assembly 21.

The preferred embodiment of the present invention illustrated in Figure 1 includes a spring 11 housed within the enclosure assembly 21 and placed between bottom cover plate 9 and piston 5. Spring 11 ensures that the piston 5 rests in a fully upward position such that the rods 3, 4 protrude upwardly through the centre hole 6 in the top cover plate 7. The piston 5 has a diameter larger than the diameter of hole 6 such that during normal operation the piston 5 cannot be removed from the enclosure assembly 21.

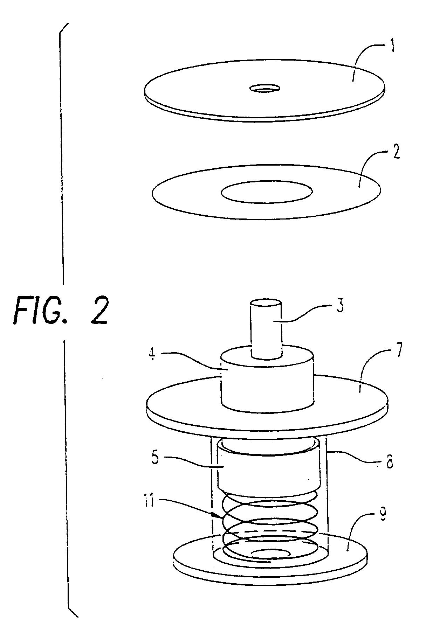

Illustrated by figure 2, the present invention is used to apply labels to CD ROMs as follows: a label 2 is placed onto the top cover plate 7 with its adhesive side fading upwardly such that the rods 3,4 are protruding through the centre hole of the label 2. The centre hole of the CD RONI 1 is then placed onto the rod 3 with its side to be labelled facing downwardly toward the adhesive side of the label 2 which is resting on the top cover plate 7. The CD ROM 1 is prevented from coming into casual contact with the adhesive side of the label 2 because the rod 4 has an intermediate diameter which is greater than the diameter of the centre hole of the CD ROM 1.

Gentle downward pressure is then applied to the rod 3 to depress the piston 5 within the enclosure assembly 21 against the action of compression spring 11. The piston 5 is gently deflected downwardly until the point at which rod 4 is fully retracted into the assembly housing 21. At this point the CD ROM 1 comes into contact with the adhesive side of the label 2.

The downward pressure is then gradually removed allowing the spring 11 to return the piston 5 to its resting, extreme upwardly, position making it easy for the user to remove the now labelled CD ROM 1.

While the invention has been described in relation to the fixing of labels onto compact discs, it will be understood that the device and method according to the invention can be applied to any similar situation where it is desired to align concentrically two or more substantially planar members.

## Claims

1. A method for applying a first substantially planar member (2) having a central aperture of a first diameter to a second substantially planar member (1) having a central aperture of a second diameter, characterised by the steps of:
positioning the first member (2) on a upper surface of a circumferential stage (7) so that the central aperture of the first member (2) is aligned with a aperture defined in the stage (7) by placing the central aperture of the first member (2) about a first rod (4) having a first end, a second end ad a third diameter slightly less than the first diameter, the first rod (4) located in a first position so as to extend through the aperture in the stage (7);
inserting a second rod (3) having a fourth diameter slightly less than the second diameter through the central aperture of the second member to position the second member (1); and
pressing the positioned second member (1) against the positioned first member (2) thereby to apply together the first and second members by displacing the second rod (3) extending from the first end of the first rod (4) against a return force provided by spring means (11), said displacement being relative to the upper surface from the first position to a second position in which the first end is located either entirely below or level with the upper surface.

2. The method of claim 1, wherein the upper surface is maintained in spaced relation above a underlying support surface and said spring means (11) is disposed between the first rod (4) and the underlying support surface.

3. The method of claim 2, wherein the spring means (11) is held in a tube (8) having a upper end and a lower end, the upper end being adjacent to the upper surface and the lower end being adjacent to the underlying supporting surface.

4. The method of claim 3, wherein the spring means (11) is held in the tube (8) by means of a closure piece (9) extending across the lower end of the tube (8).

5. The method of claim 1, wherein the second end of the first rod (4) is provided with a extension (5) portion having a diameter that is larger than the first diameter to prevent complete withdrawal of the first rod (4) through the aperture of the flange (7).

6. The method of claim 5, wherein the extension portion (5) is positioned between the circumferential stage (7) and the spring means (11).

7. The method of claim 1, wherein the first planar member (2) comprises a label having an adhesive on one surface and the second planar member (1) comprises a compact disc, and wherein the label is positioned on the upper surface so that the adhesive surface thereof is disposed remote from the upper surface.

## Patentansprüche

1. Verfahren zum Anbringen eines ersten im wesentlichen ebenen Teiles (2) mit einer zentralen Öffnung mit einem ersten Durchmesser an einem zweiten im wesentlichen ebenen Teil (1) mit einer zentralen Öffnung mit einem zweiten Durchmesser, **gekennzeichnet durch** folgende Schritte:
Positionieren des ersten Teiles (2) auf einer oberen Fläche eines Umfangsflansches (7) derart, daß die zentrale Öffnung des zweiten Teiles (2) zu einer Öffnung ausgerichtet ist, die innerhalb des Flansches (7) begrenzt ist, indem die zentrale Öffnung des ersten Teiles (2) Um einen ersten Stab (4) plaziert wird, der ein erstes Ende, ein zweites Ende und einen dritten Durchmesser aufweist, der geringfügig kleiner ist als der erste Durchmesser, wobei der erste Stab sich in einer ersten Position befindet derart, daß er sich durch die Öffnung im Flansch (7) erstreckt;
Einführen eines zweiten Stabes (3) mit einem vierten Durchmesser, der geringfügig kleiner ist als der zweite Durchmesser, durch die zentrale Öffnung des zweiten Teiles, um das zweite Teil (1) zu positionieren, und
Drucken des positionierten zweiten Teiles (1) gegen das positionierte erste Teil (2), um dadurch erstes Teil und zweites Teil aneinander anzubringen, indem der zweite Stab (3), der sich vom ersten Ende des ersten Stabes (4) erstreckt, gegen eine Rückstell-Kraft verschoben wird, die durch Federmittel (11) aufgebracht wird, wobei das Verschieben relativ zur oberen Fläche aus der ersten Position in eine zweite Position erfolgt, in welcher das erste Ende sich entweder vollständig unterhalb der oberen Fläche oder auf gleicher Röhe mit ihr befindet.

2. Verfahren nach Anspruch 1, bei welchem die obere Fläche in einem Abstand oberhalb einer darunter befindlichen Stützfläche gehalten wird und das Federmittel (11) zwischen dem ersten Stab (4) und der darunter liegenden Stützfläche angeordnet ist.

3. Verfahren nach Anspruch 2, bei welchem das Federmittel (11) in einem Rohr (8) gehalten wird, welches ein oberes Ende und ein unteres Ende aufweist, wobei das, obere Ende nahe der oberen Fläche und das untere Ende nahe der darunter befindlichen Stützfläche ist.

4. Verfahren nach Anspruch 3, bei welchem das Federmittel (11) in dem Rohr (8) mittels eines Verschlußstückes (9) gehalten ist, welches sich quer über das untere Ende des Rohres (8) erstreckt.

5. Verfahren nach Anspruch 1, bei welchem das zweite Ende des ersten Stabes (4) mit einem Fortsatzabschnitt (5) versehen ist, der einen Durchmesser aufweist, der größer ist als der erste Durchmesser, um ein vollständiges Herausziehen des ersten Stabes (4) durch die Öffnung des Flansches (7) zu verhindern.

6. Verfahren nach Anspruch 5, bei welchem der Fortsatzabschnitt (5) zwischen dem Umfangsflansch (7) und dem Federmittel (11) angeordnet ist.

7. Verfahren nach Anspruch 1, bei welchem das erste ebene Teil (2) ein Etikett umfaßt, welches an einer Fläche mit einem Kleber versehen ist, und das zweite ebene Teil eine CD umfaßt und das Etikett auf der oberen Fläche so positioniert ist, daß die Klebefläche desselben der oberen Fläche abgekehrt ist.

## Revendications

1. Procédé pour appliquer un premier élément (2) substantiellement plan ayant une ouverture centrale d'un premier diamètre sur um second élément (1) substantiellement plan ayant une ouverture centrale d'un second diamètre, ***caractérisé par*** les étapes consistant à :
positionner le premier élément (2) sur une surface supérieure d'une collerette circonférentielle (7) de façon que l'ouverture centrale du premier élément (2) soit alignée avec une ouverture définie dans la collerette (7), ceci en plaçant l'ouverture centrale du premier élément (2) autour d'une première tige (4) ayant une première extrémité, une seconde extrémité et un troisième diamètre légèrement inférieur au premier diamètre, la première tige (4) étant placée dans une première position de manière à saillir à travers l'ouverture dans la collerette (7);
insérer une seconde tige (3) ayant un quatrième diamètre légèrement inférieur au second diamètre à travers l'ouverture centrale du second élément afin de positionner le second élément (1); et
presser le second élément (1) positionné contre le premier élément (2) positionné, fin d'appliquer l'un contre l'autre le premier et le second éléments par déplacement de la seconde tige (3) saillant de la première extrémité de la première tige (4) contre une force de rappel fournie par un moyen de ressort (11), ledit déplacement se faisant par rapport à la surface supérieure, de la première position à une seconde position dans laquelle la première extrémité est située soit en totalité sous, soit de niveau avec, la surface supérieure.

2. Procédé selon la Revendication 1, dans lequel la surface supérieure est maintenue en relation écartée au-dessus d'une surface de support sous-jacente et ledit moyen de ressort (11) disposé entre la première tige (4) et la surface de support sous-jacente.

3. Procédé selon la Revendication 2, dans lequel le moyen de ressort (11) est retenu dans un tube (8) ayant une extrémité supérieure et une extrémité inférieure, l'extrémité supérieure étant adjacente à la surface supérieure et l'extrémité inférieure étant adjacente à la surface de support sous-jacente.

4. Procédé selon la Revendication 3, dans lequel le moyen de ressort (11) est retenu dans le tue (8) a moyen d'une pièce de fermeture (9) s'étendant transversalement à' l'extrémité inférieure du tube (8).

5. Procédé selon la Revendication 1, dans lequel la seconde extrémité de la première tige (4) est munie d'une portion en extension (5) ayant un diamètre qui est supérieur au premier diamètre pour empêcher le retrait total de la première tige (4) à travers l'ouverture de la collerette (7).

6. Procédé selon la Revendication 5, dans lequel la portion en extension (5) est positionnée entre la collerette circonférentielle (7) et le moyen de ressort (11).

7. Procédé selon la Revendication 1, dans lequel le premier élément plan (2) comprend une étiquette ayant un adhésîf sur une surface et le second élément plan (1) comprend un disque compact, et dans lequel l'étiquette est positionnée sut la surface supérieure de façon que la surface `adhésive de l'étiquette soit placée isolée de la surface supérieure.
